# EUROPEAN PATENT SPECIFICATION

(11) **EP 1 384 876 B1**
(45) Date of publication and mention of the grant of the patent: **03.01.2007**
(21) Application number: 03015612.9
(22) Date of filing: 15.07.2003
(51) Int. Cl.: F02D 41/02

(54) **Exhausted particulate treatment device for an engine, engine, computer program product, computer-readable storage medium and exhausted particulate treatment method for an engine**
Abgaspartikelnachbehandlungseinrichtung für einen Verbrennungsmotor, Verbrennungsmotor, Computerprogrammprodukt, computer-lesbares Speichermedium und Abgaspartikelnachbehandlungsmethode für einen Verbrennungsmotor
Dispositif de traitement des particules d'un moteur à combustion interne, moteur à combustion interne, produit programme d'ordinateur, support de mémoire lisible par ordinateur et procédé de commande de traitement des particules d'un moteur à combustion interne

(30) Priority: 22.07.2002 JP 2002211946
(43) Date of publication of application: 28.01.2004
(73) Proprietor: Mazda Motor Corporation, Aki-gun, Hiroshima 730-8670 (JP)
(72) Inventor: Nishimura, Hiroyuki, Mazda Motor Corporation, Aki-gun, Hiroshima 730-8670 (JP); Yashiki, Eriko, Mazda Motor Corporation, Aki-gun, Hiroshima 730-8670 (JP)
(74) Representative: Müller-Boré & Partner Patentanwälte

(56) References cited:
- WO-A-01/53664
- DE-A- 10 056 016
- FR-A- 2 820 462
- US-A- 3 895 541
- US-A- 4 615 172

## Description

The present invention relates to an exhausted particulate treatment device for an engine, to an engine, to a computer program product for performing a control method when run on a suitable computer, to a computer readable storage medium storing thereon a computer program and to an exhausted particulate treatment method for an engine.

Conventional diesel engines have a particulate filter in their exhaust passages to trap exhausted particulate (referred to as particulate) such as carbon included in the exhausted gas, for keeping the particulates from being released into atmosphere.

When the trapped amount of the exhausted particulates reaches the trapping capacity of the particulate filter, such engines should regenerate the filter to reinstate its filter function by burning out the exhausted particulates trapped in the filter.

In this regard, some approaches have been known which operate a heater disposed in the particulate filter, or control a fuel injector to retard a fuel injection timing from a normal timing, so as to raise the exhaust-gas temperature and promote afterburn, thereby burning out the exhausted particulates.

However, the above prior art suffers from a drawback of insufficient regeneration of the particulate filter, due to sluggish increase in the filter temperature when the engine rotational speed increases from a low-rotational speed and low-load operational condition of the engine during the regeneration operation of the particulate filter.

More particularly, during the accelerating condition from the low-rotational speed and low-load operational condition with low exhaust-gas temperature, the increase in airflow amount causes the exhaust-gas flow amount to increase. Under the low-rotational speed and low-load condition, however, the exhaust-gas temperature is originally so low that the increase in the cold exhaust-gas flow adversely cools the particulate filter, resulting in insufficient temperature-rise of particulate filter.

Especially, with a turbocharger disposed in an exhaust passage, the exhaust-gas temperature is further cooled during heat exchange between a turbine and the gas. Thus, when charging pressure is boosted to increase the airflow amount during the accelerating condition, cold exhaust-gas in a large amount is fed into the particulate filter, resulting in insufficient temperature-rise of the particulate filter.

US4615172 discloses an air path control with throttle and supercharger regulated according to the exhaust-gas temperature, to keep a continuous regeneration active.

Japanese Unexamined Patent Publication S62-67214 discloses the approach that uses a charging device disposed on the upstream side of a particulate trap, and a bypass passage bypassing the charging device. During the low-load condition, the bypass passage is open to suppress the temperature-drop in the exhaust-gas due to the charging device, so as to ensure afterburn of the particulates. During the high-load condition, the bypass passage is closed to suppress the drop in engine output.

This prior art discloses the prevention of temperature-drop in the trap during the low-load operational region, but does not discuss the problem of temperature-drop in the trap during the burn-out operation of the particulate under the accelerating condition, nor the solution thereof. Thus, the above problem still remains unsolved.

In view of the above problem, an object of the present invention is to provide an exhausted particulate treatment device for an engine that suppresses the temperature-drop in the particulate filter when the engine accelerates while the exhausted particulate is being burned out.

The object is solved according to the invention by an exhausted particulate treatment device for an engine according to claim 1, by an engine according to claim 6, by computer program product according to claim 7, by computer-readable storage medium according to claim 8 and by an exhausted particulate treatment method for an engine according to claim 1. Preferred embodiments of the present invention are subject of the dependent claims.

Thus, according to the present invention, temperature-drop in the particulate filter is suppressed when the engine accelerates while the exhausted particulate is being burned out.

In achieving the above object, the present invention adopts the following constitutions. In accordance with the present invention, there is provided an exhausted particulate treatment device for an engine, comprising: exhausted particulate trapping means to be disposed in an exhaust passage of the engine, for trapping exhausted particulate in exhaust gas; regenerating means for at least partly burning out the exhausted particulate trapped in the exhausted particulate trapping means under a specified (predetermined or predeterminable) condition; accelerating condition detecting means for detecting the accelerating condition of the engine; and exhaust-gas temperature raising means which can cause a rise of the temperature of the exhaust gas flowing into the exhausted particulate trapping means from the exhaust-gas temperature attained while said regenerating means is out of its burning-out operation of the exhausted particulate, when the accelerating condition detecting means detects the accelerating condition of the engine while the regenerating means is in its burning-out operation of the exhausted particulate.

Accordingly, the exhaust-gas temperature flowing into the exhausted particulate trapping means is raised when the engine accelerates while the exhausted particulate is being burned out, so as to suppresses the temperature-drop in the exhausted particulate trapping means, thereby reliably burning out the exhausted particulate.

Preferably, the exhausted particulate treatment device for an engine may further include: gear ratio setting means for setting a gear ratio of an automatic transmission of the engine according to a shift line defined based on a vehicle traveling condition; and gear ratio correcting means for correcting the gear ratio set by the gear ratio setting means. The exhaust-gas temperature raising means includes the gear ratio correcting means. The gear ratio correcting means is configured to be more likely to hinder the gear ratio setting means from changing the gear ratio to the higher side than the case while the regenerating means is out of its burning-out operation of the exhausted particulate, when the accelerating condition detecting means detects the accelerating condition of the engine while the regenerating means is in its burning-out operation of the exhausted particulate.

Accordingly, the gear ratio is hindered from being changed to the higher side when the engine accelerates while the exhausted particulate is being burned out, so as to be likely to maintain the gear ratio on the lower side, which in turn increases the engine rotational speed. This increases the amount of intake air and thus raises the temperature of the exhaust-gas flowing into the exhausted particulate trapping means, thereby reliably burning out the exhausted particulate.

More preferably, the gear ratio correcting means may hinder the gear ratio from being changed to the higher side by correcting the shift line, to which the gear ratio setting means refers, towards the higher vehicle speed side, when the accelerating condition detecting means detects the accelerating condition of the engine while the regenerating means is in its burning-out operation of the exhausted particulate.

Accordingly, the shift line, to which the gear ratio setting means refers, is corrected towards the higher vehicle speed side when the engine accelerates while the exhausted particulate is being burned out, so as to be likely to maintain the gear ratio on the lower side, which in turn increases the engine rotational speed. This raises the temperature of the exhaust-gas flowing into the exhausted particulate trapping means, thereby reliably burning out the exhausted particulate.

Still further preferably, the device may include: an oxidation catalyst disposed on the upstream side of the exhausted particulate trapping means in the exhaust passage; a fuel injection means for injecting fuel directly into a combustion chamber of the engine; exhausted particulate amount detecting means for directly or indirectly detecting the amount of exhausted particulate trapped in the exhausted particulate trapping means; post injection means for additionally performing a post injection during the expansion stroke after a main injection is performed near the top dead center of the compression stroke, when the exhausted particulate amount detected by the exhausted particulate amount detecting means reaches the predeterminable amount or above; and/or post injection correcting means for correcting the amount of the post injection performed by the post injection means. The regenerating means includes the post injection means. The exhaust-gas temperature raising means further includes the post injection correcting means. The post injection correcting means preferably increases the amount of the post injection, when the accelerating condition detecting means detects the accelerating condition of the engine while the regenerating means is in its burning-out operation of the exhausted particulate.

Accordingly, the amount of the post injection is increased when the engine accelerates while the exhausted particulate is being burned out, so as to increase the amount of fuel to be fed into the oxidation catalyst. This promotes the oxidation reaction of the fuel in the oxidation catalyst to raise the exhaust-gas temperature, which in turn suppresses the temperature-drop of the exhaust-gas flowing into the exhausted particulate trapping means, thereby reliably burning out the exhausted particulate.

In accordance with the present invention, the exhausted particulate treatment device according to the present invention or the preferred embodiment thereof may be advantageously used in combination with an engine, more preferably a diesel engine.

Preferably, the engine may include: a turbocharger.

Accordingly, the temperature-drop of the exhaust-gas flowing into the exhausted particulate trapping means is suppressed, thereby reliably burning out the exhausted particulate, in an engine with a turbocharger which may greatly reduce the exhaust-gas temperature.

In accordance with the present invention, there is further provided a computer program, which, when loaded onto an exhausted particulate treatment device for an engine including at least a computer, and an exhausted particulate trapping means disposed in an exhaust passage of the engine, capable of trapping exhausted particulate in the exhaust gas, carries out the following steps: at least partly burning out the exhausted particulate trapped in the exhausted particulate trapping means under a specified (predetermined or predeterminable) condition; detecting an accelerating condition of the engine; and raising the temperature of the exhaust-gas flowing into the exhausted particulate trapping means when the accelerating condition of the engine is detected while the exhausted particulate is being burned out.

Accordingly, the exhaust-gas temperature flowing into the exhausted particulate trapping means is raised when the engine accelerates while the exhausted particulate is being burned out, so as to suppresses the temperature-drop in the exhausted particulate trapping means, thereby reliably burning out the exhausted particulate.

In accordance with the present invention, there is provided a computer-readable storage medium having stored thereon the computer program product according to the invention or a preferred embodiment thereof.

In accordance with the present invention, there is further provided a control method or an exhausted particulate treatment method for an engine having an exhausted particulate trapping means disposed in an exhaust passage, which is capable of trapping exhausted particulate in the exhaust gas, comprising the following steps:
at least partly burning out the exhausted particulate trapped in the exhausted particulate trapping means under a specified (predetermined or predeterminable) condition;
detecting an accelerating condition of the engine; and
raising the temperature of the exhaust-gas flowing into the exhausted particulate trapping means when the accelerating condition of the engine is detected while the exhausted particulate is being burned out.

Preferably, the raising of the exhaust-gas temperature is achieved by:
adjusting the gear ratio of an automatic transmission (24) coupled to the engine (1) so that the changing of the gear ratio to the higher side is more likely hindered in the condition where the exhausted particulate is being burned out than in the condition where the exhausted particulate is not being burned out.

Most preferably, the method further comprises the following steps:
setting a gear ratio of an automatic transmission of the engine according to a shift line defined based on a vehicle travelling condition; and
correcting the set gear ratio,
wherein the changing the gear ratio to the higher side is more likely hindered in the condition when the exhausted particulate is being burned out than in the condition where the exhausted particulate is not being burned out.

Other features, aspects, and advantages of the present invention will become apparent from the following description of preferred embodiments of the invention which refer to the accompanying drawings.
FIG. 1 is an overall construction of the preferred embodiments of the present invention;
FIG. 2 is a control block diagram of the first embodiment;
FIG. 3 is a diagram showing the post injection timing map of the embodiments;
FIG. 4 is a flowchart showing the control of the first embodiment;
FIGS. 5(a) and 5(b) are diagrams showing the normal shift schedule and the regenerative shift schedule, respectively, in the first embodiment;
FIG. 6 is a diagram comparing the normal shift schedule and the regenerative shift schedule;
FIG. 7 is a control block diagram of the second embodiment; and
FIG. 8 is a timing chart of the second embodiment.

Preferred embodiments of the present invention will now be described with reference to the drawings. It should be understood that even though the embodiments are separately described, single features thereof may be combined to additional embodiments.

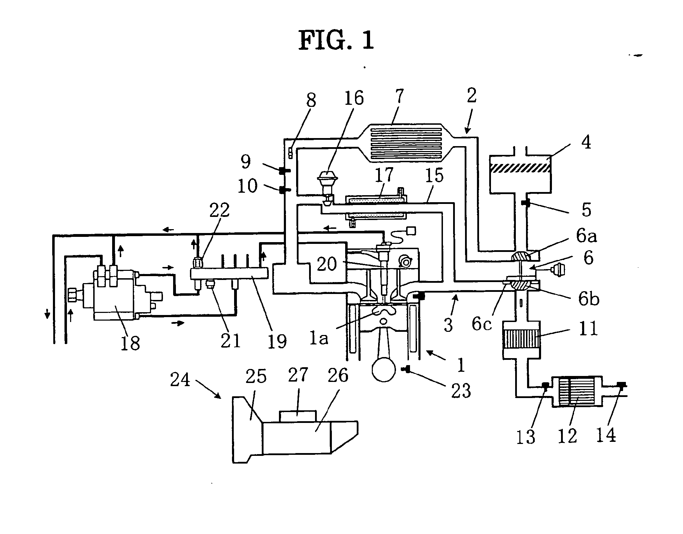

FIG. 1 illustrates the overall construction of this embodiment. Identified by the reference numeral 1 is a multi- (e.g. four-) cylinder diesel engine, which includes an intake passage 2 and an exhaust passage 3 connected thereto.

In the intake passage, from its upstream side to its downstream side, there is disposed an air filter 4, an air-flow sensor 5, a blower 6a of a VGT turbocharger (i.e. variable geometry turbocharger) 6, an intercooler 7, an intake throttle valve 8, an intake-air temperature sensor 9, and/or an intake-air pressure sensor 10, preferably in this order.

In the exhaust passage, from its upstream side to its downstream side, there is disposed a turbine 6b of the VGT turbocharger (i.e. variable geometry turbocharger) 6, a movable vane 6c, an oxidation catalyst 11, and/or a particulate filter 12. The movable vane 6c is preferably provided for adjusting the exhaust-gas velocity flowing into the turbine 6b.

On the upstream side and downstream side of the particulate filter 12, exhaust-gas pressure sensors 13, 14 are provided respectively, for detecting the trapped amount of the exhausted particulate in the particulate filter 12. The detection is made based on the pressure difference between the detections of exhaust-gas pressure sensors 13 and 14.

The intake passage 2 and the exhaust passage 3 can (preferably controllably) communicate with each other through an exhaust-gas recirculation passage 15. At the midstream portion of the exhaust-gas recirculation passage 15, an exhaust-gas recirculation valve 16 and a cooler 17 are disposed. The exhaust-gas recirculation valve 16 is vacuum-actuated, and the cooler 17 cools the exhaust gas by use of engine coolant.

Identified by the reference numeral 18 is a fuel injection pump, which supplies fuel from a fuel tank (not shown) to a common rail 19 serving as an accumulating means.

The common rail 19 communicates with respective fuel injectors 20 (one of which is shown in FIG. 1) provided for each of cylinders. In the common rail 19, there is disposed a fuel injection pressure sensor 21 and a relief valve 22. The relief valve 22 opens and releases fuel to the fuel tank side when the pressure of the accumulated fuel in the common rail 19 reaches an allowable (predetermined or predeterminable) pressure or higher.

Identified by the reference numeral 23 is a crank angle sensor (as a preferred engine rotational speed sensor) operative to detect engine rotational speed.

Identified by the reference numeral 24 is an automatic transmission comprising a torque converter 25 and a planetary-type multi-speed gear mechanism 26. It should be, however, understood, that other types of transmission (e.g. manual transmission, sequential transmission, etc.) may be also used.

The planetary-type multi-speed gear mechanism 26 is equipped with a plurality of shift solenoid valves 27. The solenoid valves 27 are selectively energized or deenergized in a variety of combinations, which achieve different gear ratios.

### (First Embodiment)

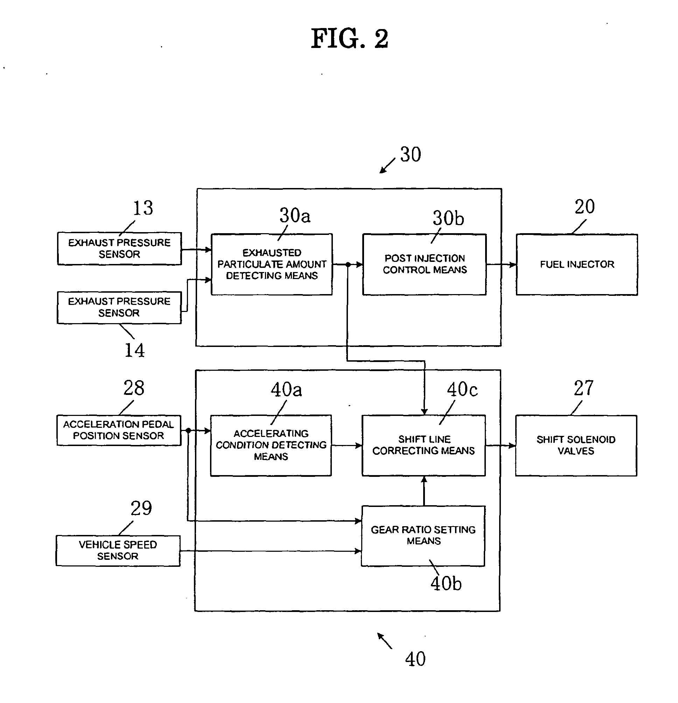

FIG. 2 shows a control block diagram of a first preferred embodiment of the present invention. An engine control unit 30 receives detected signals by the exhaust pressure sensor 13, 14.

The engine control unit 30 is provided with an exhausted particulate amount detecting means 30a operative to detect the trapped amount of the exhausted particulate in the particulate filter 12.

The exhausted particulate amount detecting means 30a detects the amount preferably based on the difference in exhaust pressure across the particulate filter 12.

This detection can be made because the pressure difference depends on the trapped amount of the exhausted particulate in such a way that the exhaust pressure increases on the upstream side of the particulate filter as the trapped amount increases.

A post injection control means 30b (as a preferred regenerating means) is provided for performing the post injection in particular for the purpose of burning out the exhausted particulate in the particulate filter 12. The post injection is additionally performed during the expansion stroke after a main injection is performed near the top dead center (TDC) of the compression stroke, when the amount of the exhausted particulate detected by the exhausted particulate amount detecting means 30a reaches a first specified (predetermined or predeterminable) amount preferably substantially equivalent or corresponding to the trapping capacity of the particulate filter 12.

In other words, the post injection aims at causing its additional fuel to afterburn in the exhaust passage 3 and to react with oxygen in the oxidation catalyst 11 for raising the exhaust-gas temperature, thereby burning out the exhausted particulates trapped in the particulate filter 12.

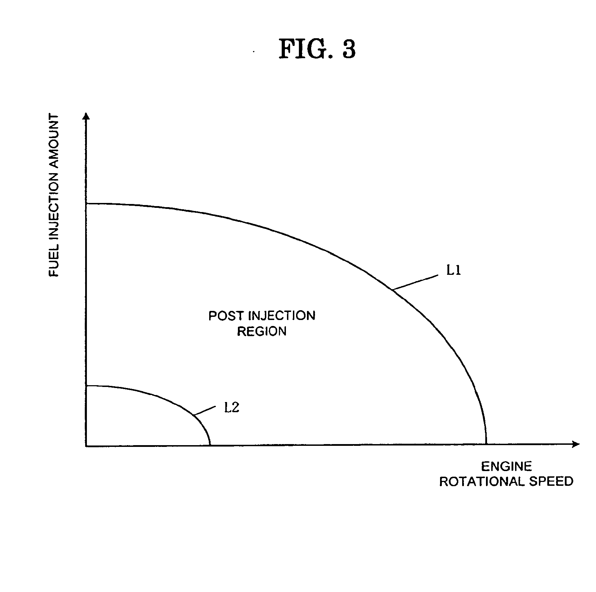

As shown in FIG. 3, the post injection is performed in the limited region defined between lines L1 and L2, while being prohibited on the outside of the line L1 (on the larger fuel-injection-amount and/or larger engine-rotational-speed side of the line L1) and on the inside of the line L2 (on the smaller fuel-injection-amount and/or smaller engine-rotational-speed side of the line L2). The reason for this prohibition is as follows:
On the outside of the line L1, high engine rotational speed and/or high engine load provide so high exhaust-gas temperature that the filter 12 spontaneously regenerates. Moreover, in the region, the post injection may cause unduly high exhaust-gas temperature which impairs thermal durability of components in the exhaust system. On the inside of the line L2, the low engine rotational speed and/or the low engine load provide too low exhaust-gas temperature to attain sufficiently high temperature for burning out the exhausted particles even with the post injection. Rather, in the region, the prohibition of the post injection advantageously suppresses the degradation in fuel efficiency.

An (automatic) transmission control unit 40 receives detected signals by an acceleration pedal position sensor 28 and a vehicle speed sensor 28 for controlling the shift solenoid valves 27 of the automatic transmission 24.

The automatic transmission control unit 40 is provided with: an accelerating condition detecting means 40a; a gear ratio setting means 40b; and/or a shift line correcting means 40c. The accelerating condition detecting means 40a is provided for detecting an accelerating condition of the vehicle based on a change in acceleration pedal position. The gear ratio setting means 40b is provided for setting a gear ratio in accordance with a shift line defined based on an acceleration pedal position and a vehicle speed. The shift line correcting means 40c corrects the shift line (or shift characteristics) set by the gear ratio setting means 40b towards higher vehicle speed side, when the accelerating condition detecting means 40a detects the accelerating condition while the exhausted particulates are being burning-out after the exhausted particulate amount detecting means 30a detects that the exhausted particulate amount reaches the first predetermined or predeterminable amount or more.

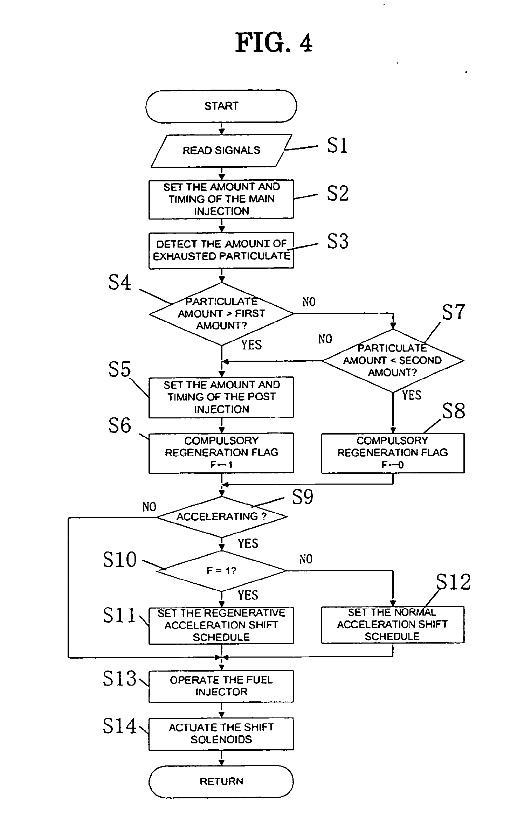

Controls of the fuel injector 20 and shift solenoid valves 27 will now be described with reference to the flow chart shown in FIG. 4. As apparent from the above description, the engine control unit 30 and the (automatic) transmission control unit 40 are preferably loaded with a computer program for carrying out the following control flow. The program is preferably stored in a memory (not shown) coupled to the engine control unit 30 and the automatic transmission control unit 40.

As shown in FIG. 4, at step S1, the detected signals from the exhaust pressure sensors 13, 14, the acceleration pedal position sensor 28, the vehicle speed sensor 29, and other sensors are read or inputted.

Then, at step S2, the amount of the fuel to be injected during the main injection near the top dead center (TDC) of the compression stroke is determined with reference to a map or table or relationship based on the engine rotational speed and/or the acceleration pedal position. Also, at step S2, the timing of the main injection is determined with reference to a map or table or relationship based on the engine rotational speed and/or the fuel injection amount (preferably determined based on the engine rotational speed and the acceleration pedal position).

At step S3, the trapped amount of exhausted particulate in the particulate filter 12 is detected or computed preferably based on the pressure difference between the detections of the exhaust pressure sensors 13, 14.

At step S4, a judgement is made as to whether or not the exhausted particulate amount detected at step S3 is equals to or larger than the first specified (predetermined or predeterminable) amount preferably equivalent to the trapping capacity of the particulate filter 12.

If YES at step S4 indicating that the trapped amount of the exhausted particulate in the particulate filter 12 has reached the predetermined or predeterminable first amount (preferably substantially its trapping capacity) and thus the particulate filter should be regenerated by burning-out the particulate, the routine proceeds to step S5, where the amount and timing of the post injection are set. Then, at step S6, a compulsory regeneration flag F is set to 1.

If NO at step S4, the routine proceeds to step S7, where a judgement is made as to whether or not the particulate amount is below a second specified (predetermined or predeterminable) amount (less than approximately 10% of a maximum particulate capacity of the particulate filter 12, most preferably of approximately zero) smaller than the first predetermined or predeterminable amount.

If NO at step S7 indicating that the exhaust particulate amount still remains large, then the routine proceeds to step S5, where the amount and timing of the post injection are set as above.

If YES at step S7 indicating that the particulate filter 12 has been sufficiently regenerated, the routine proceeds to step S8 skipping the setting of the parameters for the post injection. At step S8, the compulsory regeneration flag F is set to 0.

Then, at step S9, a judgement is made as to whether or not the engine 1 is in an accelerating condition.

If YES at step S9, a judgement is made as to whether or not the compulsory regeneration flag F has been set to 1.

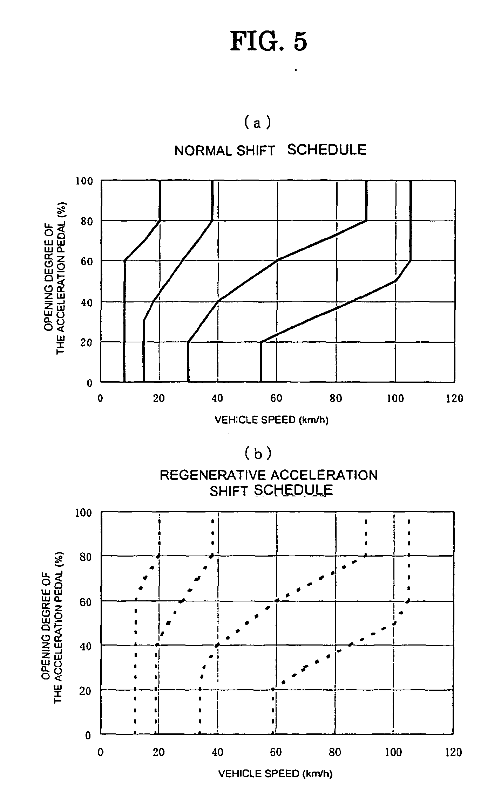

If YES at step S10 indicating that the engine 1 has shifted to the accelerating condition while the exhausted particulate is being burned out, the routine proceeds to step S11, where the regenerative acceleration shift schedule shown in FIG. 5(b) is set for the automatic transmission 24.

If NO at step S10, the routine proceeds to step S12, where the normal acceleration shift schedule shown in FIG. 5(a) is set for the automatic transmission 24.

If NO at step S9, the routine proceeds to step S13.

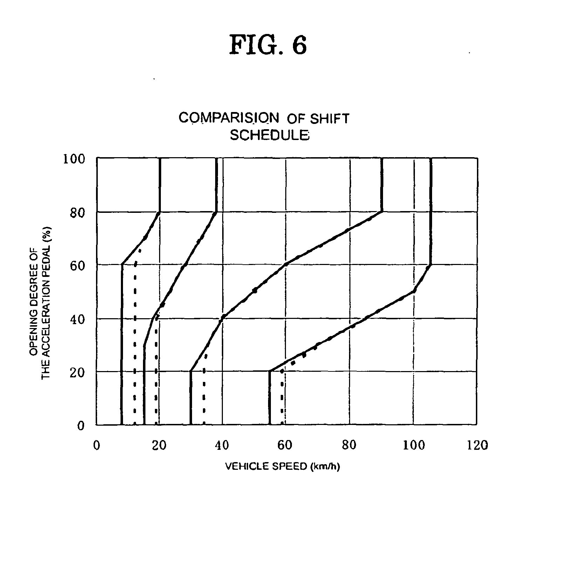

FIG. 6 compares the above shift schedules or characteristics. In FIG. 6, the solid lines indicate the normal acceleration shift schedule; the broken lines indicate the regenerative acceleration shift schedule. As shown, the regenerative acceleration schedule defines shift lines on the higher vehicle speed side of those in the normal acceleration shift schedule.

Then, at step S13, the fuel injector 18 is operated so as to perform the main injection in the amount and timing determined at step S2, and so as to perform the post injection in the amount and timing determined at step S5.

At step S14, the shift solenoid valves 27 are actuated so as to achieve gear ratio according to the shift schedule set at step S11 or S12.

According to the first embodiment, the shift line across which the automatic transmission changes its gear ratio is corrected towards the higher vehicle speed side when the engine 1 shifts to the accelerating condition while the exhausted particulate is being burned out. Then, the gear ratio tends to be maintained on the lower side with higher engine rotational speed.

Accordingly, the amount of the intake air is increased to raise the combustion temperature, which in turn causes the exhaust-gas temperature to rise, thereby reliably burning out the exhausted particulate.

### (Second Embodiment)

Described next is a second preferred embodiment of the present invention.

The second preferred embodiment raises the exhaust-gas temperature by increasing the amount of post injection so as to promote oxidation reaction of fuel in the oxidation catalyst 11 when the engine 1 shifts to the accelerating condition while the exhausted particulate is being burned out, unlike the first embodiment that raises the exhaust-gas temperature by correcting the shift line, across which the automatic transmission 24 changes its gear ratio, towards the higher vehicle speed side so as to increase the engine rotational speed with higher exhaust-gas temperature.

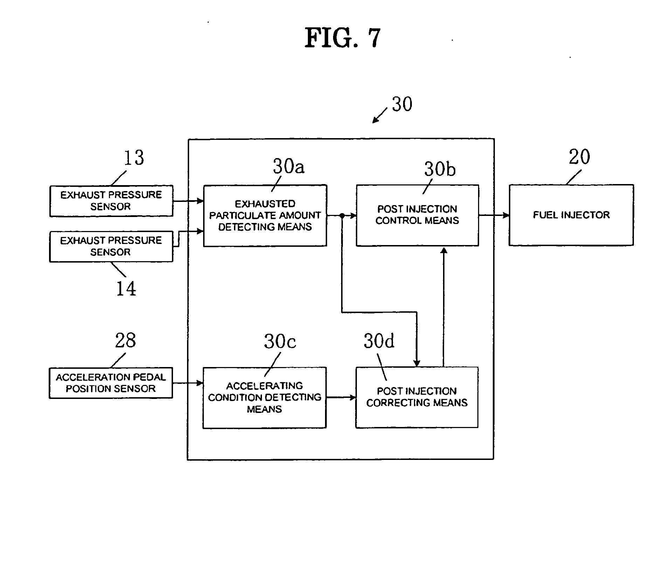

FIG. 7 shows a control block diagram of the second preferred embodiment, in which only the components associated with the control of the fuel injector 20 are illustrated. The second preferred embodiment differs from the first preferred embodiment in an accelerating condition detecting means 30c and/or a post injection amount correcting means 30d being additionally provided. The accelerating condition detecting means 30c is provided for detecting an accelerating condition. The post injection amount correcting means 30d is provided for correctively increasing the amount of the post injection to be performed by the post injection control means 30b when the accelerating condition detecting means 30c detects the accelerating condition while the exhausted particulate is being burned out.

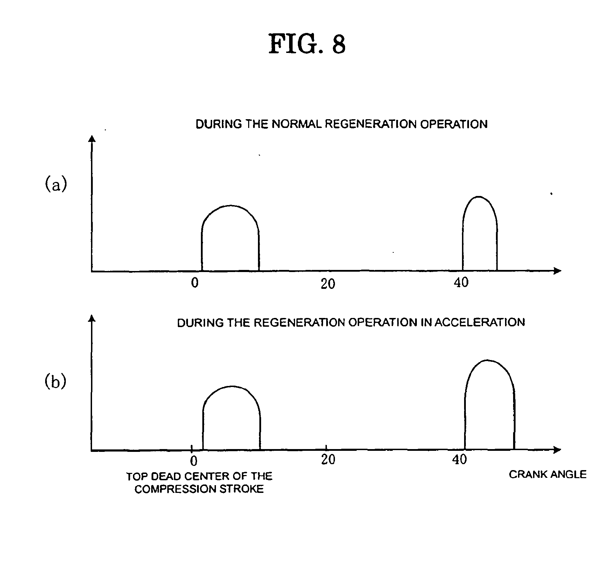

FIG. 8 shows the profile of the main injection and the post injection. FIG. 8(a) shows the profiles seen during the normal regeneration operation; FIG. 8(b) shows the profiles seen in the accelerating condition during the regeneration operation.

As apparent from FIG. 8, the main injection is similarly performed in both the conditions. As for the post injection, in the accelerating condition during the regeneration operation, its amount is increased from that in the normal regenerating operation.

According to the second preferred embodiment, the amount of the post injection is increased when the engine 1 shifts to the accelerating condition while the exhausted particulate is being burned out. This increases the amount of fuel to be fed into the oxidation catalyst 11 so as to promote the oxidation reaction of the fuel in the oxidation catalyst 11, which in turn raises the exhaust-gas temperature, thereby reliably burning out the exhausted particulate.

While the shift line across which the automatic transmission 24 changes its gear ratio is corrected towards the higher vehicle speed side when the engine 1 shifts to the accelerating condition while the exhausted particulate is being burned out in the first embodiment, the gear ratio may be compulsorily changed towards the lower side to increase the engine rotational speed and thus raise the exhaust-gas temperature.

With a slip control being provided for adjusting slippage across a torque converter shaft, the exhaust-gas temperature may be raised by reducing the slippage to increase the engine rotational speed when the engine shifts to the accelerating condition while the exhausted particulate is being burned out.

Another alternative may combine the corrective increase in the post injection with one of the shift line correction towards the higher vehicle speed side, compulsory gear-ratio correction towards the lower side, and the slippage correction.

Alternatively, the exhausted particulate may be burned out by retarding the timing of the main injection timing, instead of performing the post injection as in the embodiments described above.

Further, though the embodiments detect the accelerating condition based on the change in acceleration pedal position, the condition may be detected based on the change in engine rotational speed and/or the change in intake airflow amount.

Moreover, though this embodiment runs the computer program for performing the controls of the present invention which have been stored in the memories of the control unit 30 and the automatic transmission control unit 40, the programs may be stored in a storage medium (e.g. CD-ROM) separate from the control units 30, 40 or may be implemented in a dedicated circuitry, logic component and/or programmable device (e.g. an EPROM).

In addition, the computer programs may be obtained through wireless communication means such as the Internet and stored e.g. in a rewritable ROM.

Exhausted particulate trapping means 12 is disposed in an exhaust passage 3 of the engine 1, for trapping exhausted particulate in exhaust gas. Regenerating means 30b is provided for burning out the particulate trapped in the exhausted particulate trapping means 12 under a specified (predetermined or predeterminable) condition. Accelerating condition detecting means 40a is provided for detecting the accelerating condition of the engine 1. When the accelerating condition detecting means 40a detects the accelerating condition while the regenerating means 30b is in its burning-out operation of the particulate, the temperature of the exhaust gas flowing into the exhausted particulate trapping means 12 is raised from the exhaust-gas temperature attained while the regenerating means 30b is out of its burning-out operation. The exhaust-gas temperature flowing into the exhausted particulate trapping means 12 is raised when the engine 1 accelerates while the particulate is being burned out, so as to suppress the temperature-drop in the exhausted particulate trapping means 12, thereby reliably burning out the particulate.

It should be appreciated that the preferred embodiment of the present invention is described for a diesel engine, but the present invention may apply to gasoline engines or any other engines that may produce carbon particulate. Also, the application of the present invention is not limited to automotive engines, but includes engines in industrial use or engines used for other purposes.

## Claims

1. An exhausted particulate treatment device for an engine (1), comprising:
exhausted particulate trapping means (12) to be disposed in an exhaust passage (3) of the engine (1), for trapping exhausted particulate in an exhaust gas;
regenerating means (30b) for burning out at least part of the exhausted particulate trapped in said exhausted particulate trapping means (12) under a specified condition;
accelerating condition detecting means (40a) for detecting the accelerating condition of the engine (1); and
exhaust-gas temperature raising means (30b, 30d, 40c), which causes a raise of the temperature of the exhaust gas flowing into said exhausted particulate trapping means (12), when said accelerating condition detecting means (40a) detects the accelerating condition of the engine (1) while said regenerating means (30b, 30d, 40c) is in its burning-out operation of the exhausted particulate.

2. The exhausted particulate treatment device for an engine (1) as defined in Claim 1, further comprising:
gear ratio setting means (40b) for setting a gear ratio of an automatic transmission (24) of the engine (1) according to a shift line defined based on a vehicle traveling condition; and
gear ratio correcting means (40c) for correcting the gear ratio set by the gear ratio setting means (40b),
wherein said exhaust-gas temperature raising means (30d) includes said gear ratio correcting means (40c), said gear ratio correcting means (40c) being configured to be more likely to hinder said gear ratio setting means (40b) from changing the gear ratio to the higher side than the case while said regenerating means (30b) is out of its burning-out operation of the exhausted particulate, when said accelerating condition detecting means (40a) detects the accelerating condition of the engine (1) while said regenerating means (30b) is in its burning-out operation of the exhausted particulate.

3. The exhausted particulate treatment device for an engine (1) as defined in Claim 2,
wherein said gear ratio correcting means (40c) hinders the gear ratio from being changed to the higher side by correcting the shift line, to which said gear ratio setting means (40b) refers, towards the higher vehicle speed side, when said accelerating condition detecting means (40a) detects the accelerating condition of the engine (1) while said regenerating means (30b) is in its burning-out operation of the exhausted particulate.

4. The exhausted particulate treatment device for an engine (1) as defined in any one of Claims 2 or 3, further comprising:
an oxidation catalyst (11) to be disposed on the upstream side of said exhausted particulate trapping means (12) in the exhaust passage (3);
fuel injection means (20) for injecting fuel directly into a combustion chamber (1a) of the engine (1);
exhausted particulate amount detecting means (30a) for directly or indirectly detecting the amount of exhausted particulate trapped in said exhausted particulate trapping means (12);
post injection means (30b) for additionally performing a post injection during the expansion stroke after a main injection is performed near the top dead center of the compression stroke, when the exhausted particulate amount detected by said exhausted particulate amount detecting means (30a) reaches the predeterminable amount or above; and
post injection correcting means (30d) for correcting the amount of the post injection performed by said post injection means (30b),
wherein said regenerating means (30b) includes said post injection means (30b), and
said exhaust-gas temperature raising means (30b, 30d, 40c) further includes said post injection correcting means (30d), said post injection correcting means (30d) increasing the amount of the post injection, when said accelerating condition detecting means (40a) detects the accelerating condition of the engine (1) while said regenerating means (30b) is in its burning-out operation of the exhausted particulate.

5. An engine (1) equipped with the exhausted particulate treatment device as defined in any one of preceding claims.

6. An engine as defined in Claim 5, further comprising a turbocharger (6).

7. A computer program product, which, when loaded onto an exhausted particulate treatment device for an engine (1) including at least a computer, and an exhausted particulate trapping means (12) disposed in an exhaust passage (3) of the engine (1), capable of trapping exhausted particulate in the exhaust gas, carries out the following steps:
at least partly burning out the exhausted particulate trapped in the exhausted particulate trapping means (12) under a specified condition;
detecting an accelerating condition of the engine (1); and
raising the temperature of the exhaust-gas flowing into the exhausted particulate trapping means (12) when the accelerating condition of the engine (1) is detected while the exhausted particulate is being burned out.

8. A computer-readable storage medium having stored thereon the computer program product as defined in Claim 7.

9. An exhausted particulate treatment method for an engine (1) having an exhausted particulate trapping means (12) disposed in an exhaust passage (3), which is capable of trapping exhausted particulate in the exhaust gas, comprising the following steps:
at least partly burning out the exhausted particulate trapped in the exhausted particulate trapping means (12) under a specified condition;
detecting an accelerating condition of the engine (1); and
raising the temperature of the exhaust-gas flowing into the exhausted particulate trapping means (12) when the accelerating condition of the engine (1) is detected while the exhausted particulate is being burned out.

10. The method according to claim 9, wherein the raising of the exhaust-gas temperature is achieved by:
adjusting the gear ratio of an automatic transmission (24) coupled to the engine (1) so that the changing of the gear ratio to the higher side is more likely hindered in the condition where the exhausted particulate is being burned out than in the condition where the exhausted particulate is not being burned out.

## Patentansprüche

1. Abgaspartikel-Nachbehandlungseinrichtung für einen Motor (1), umfassend:
Abgaspartikel-Einfangmittel (12), welche in einem Abgasdurchtritt (3) des Motors bzw. Verbrennungsmotors (1) anzuordnen sind, zum Einfangen von Abgasteilchen bzw. -partikeln in einem Abgas;
Regeneriermittel (30b) zum Verbrennen wenigstens eines Teils der Abgaspartikel, welche in den Abgaspartikel-Einfangmitteln (12) eingefangen sind, unter einer bestimmten Bedingung;
Beschleunigungszustands-Detektionsmittel (40a) zum Detektieren bzw. Feststellen des Beschleunigungszustands des Motors (1); und
Abgastemperatur-Anhebemittel (30b, 30d, 40c), welche einen Anstieg der Temperatur des Abgases bewirken, welches in die Abgaspartikel-Einfangmittel (12) strömt bzw. fließt, wenn die Beschleunigungszustands-Detektionsmittel (40a) den Beschleunigungszustand des Motors (1) detektieren, während sich die Regenerationsmittel (30b, 30d, 40c) in ihrem Ausbrennbetrieb der Abgaspartikel befinden.

2. Abgaspartikel-Nachbehandlungseinrichtung für einen Motor (1) nach Anspruch 1, weiterhin umfassend:
Übersetzungs- bzw. Getriebeverhältnis-Einstellmittel (40b) zum Einstellen eines Übersetzungs- bzw. Getriebeverhältnisses eines Automatikgetriebes (24) des Motors (1) gemäß einer Schaltlinie, welche basierend auf einem Fahrzeugfahrzustand definiert ist; und
Übersetzungsverhältnis-Korrekturmittel (40c) zum Korrigieren des Übersetzungsverhältnisses, welches durch die Übersetzungsverhältnis-Einstellmittel (40b) eingestellt ist,
wobei die Abgastemperatur-Anhebemittel (30d) die Übersetzungsverhältnis-Korrekturmittel (40c) beinhalten, wobei die Übersetzungsverhältnis-Korrekturmittel (40c) konfiguriert sind, um wahrscheinlicher die Übersetzungsverhältnis-Einstellmittel (40b) an einem Ändern des Übersetzungsverhältnisses zu der höheren Seite zu hindern als in dem Fall, während sich die Regenerationsmittel (30b) außerhalb ihres Ausbrennbetriebs der Abgaspartikel befinden, wenn die Beschleunigungszustands-Detektionsmittel (40a) den Beschleunigungszustand des Motors (1) detektieren, während sich die Regenerationsmittel (30b) in ihrem Ausbrennbetrieb der Abgaspartikel befinden.

3. Abgaspartikel-Nachbehandlungseinrichtung für einen Motor (1) nach Anspruch 2, wobei die Übersetzungsverhältnis-Korrekturmittel (40c) das Übersetzungsverhältnis daran hindern, zu der höheren Seite geändert zu werden, indem die Schaltlinie, auf welche sich die Übersetzungsverhältnis-Einstellmittel (40b) beziehen, zu der Seite höherer Fahrzeuggeschwindigkeit korrigiert wird, wenn die Beschleunigungszustands-Detektionsmittel (40a) den beschleunigenden bzw. Beschleunigungszustand des Motors (1) detektieren, während sich die Regenerationsmittel (30b) in ihrem Ausbrennbetrieb der Abgasteilchen befinden.

4. Abgaspartikel-Nachbehandlungseinrichtung für einen Motor (1) nach einem der Ansprüche 2 oder 3, weiterhin umfassend:
einen Oxidationskatalysator (11), welcher an der stromaufwärtigen Seite der Abgaspartikel-Einfangmittel (12) in dem Abgasdurchtritt (3) anzuordnen ist;
Kraftstoffeinspritzmittel (20) zum Einspritzen von Kraftstoff direkt in eine Verbrennungskammer (1 a) des Motors (1);
Abgaspartikelmengen-Detektionsmittel (30a) für ein direktes oder indirektes Detektieren der Menge an Abgaspartikeln, welche in den Abgaspartikel-Einfangmitteln (12) eingefangen sind;
Nacheinspritzungsmittel (30b) für ein zusätzliches Durchführen einer Nacheinspritzung während des Expansionshubs, nachdem eine Haupteinspritzung nahe dem oberen Totpunkt des Kompressionshubs durchgeführt ist, wenn die Abgaspartikelmenge, welche durch die Abgaspartikelmengen-Detektionsmittel (30a) detektiert ist, die vorbestimmbare Menge oder darüber erreicht; und
Nacheinspritzungs-Korrekturmittel (30d) zum Korrigieren der Menge der Nacheinspritzung, welche durch die Nacheinspritzungsmittel (30b) durchgeführt ist bzw. wird,
wobei die Regenerationsmittel (30b) die Nacheinspritzungsmittel (30b) enthalten, und
wobei die Abgastemperatur-Anhebemittel (30b, 30d, 40c) weiterhin die Nacheinspritzungs-Korrekturmittel (30d) enthalten, wobei die Nacheinspritzungs-Korrekturmittel (30d) die Menge der Nacheinspritzung erhöhen, wenn die Beschleunigungszustands-Detektionsmittel (40a) den beschleunigenden bzw. Beschleunigungszustand des Motors (1) detektieren, während sich die Regenerationsmittel (30b) in ihrem Ausbrennbetrieb der Abgaspartikel befinden.

5. Motor bzw. Verbrennungsmotor (1), welcher mit der Abgaspartikel-Nachbehandlungsvorrichtung ausgerüstet ist, wie sie in einem der vorangehenden Ansprüche definiert ist.

6. Motor nach Anspruch 5, weiterhin umfassend einen Turbolader (6).

7. Computerprogrammprodukt, welches, wenn es auf eine Abgaspartikel-Nachbehandlungsvorrichtung für einen Motor (1) geladen ist, enthaltend wenigstens einen Computer, und Abgaspartikel-Einfangmittel (12), welche in einem Abgasdurchtritt (3) des Motors (1) angeordnet sind, welche zu einem Einfangen von Abgaspartikeln in dem Abgas fähig sind, die folgenden Schritte ausführt:
wenigstens teilweises Ausbrennen der Abgaspartikel, welche in den Abgaspartikel-Einfangmitteln (12) eingefangen sind, unter einer bestimmten Bedingung bzw. einem bestimmten Zustand;
Detektieren eines beschleunigenden bzw. Beschleunigungszustands des Motors (1); und
Anheben der Temperatur des Abgases, welches in die Abgaspartikel-Einfangmittel (12) strömt bzw. fließt, wenn der Beschleunigungszustand des Motors (1) detektiert ist bzw. wird, während die Abgaspartikel ausgebrannt sind bzw. werden.

8. Computerlesbares Speichermedium, welches darauf das Computerprogrammprodukt gespeichert aufweist, wie es in Anspruch 7 definiert ist.

9. Abgaspartikel-Nachbehandlungsverfahren für einen Motor (1), welcher Abgaspartikel-Einfangmittel (12) aufweist, welche in einem Abgasdurchtritt (3) angeordnet sind, welche zu einem Einfangen von Abgaspartikeln in dem Abgas fähig sind, umfassend die folgenden Schritte:
wenigstens teilweises Ausbrennen der Abgaspartikel, welche in den Abgaspartikel-Einfangmittein (12) eingefangen werden, unter einer bestimmten Bedingung bzw. einem bestimmten Zustand;
Detektieren eines beschleunigenden bzw. Beschleunigungszustands des Motors (1); und
Anheben der Temperatur des Abgases, welches in die Abgaspartikel-Einfangmittel (12) strömt bzw. fließt, wenn der Beschleunigungszustand des Motors (1) detektiert wird, während die Abgaspartikel ausgebrannt werden.

10. Verfahren nach Anspruch 9, wobei das Anheben der Abgastemperatur erzielt wird durch:
Einstellen des Gang- bzw. Übersetzungsverhältnisses eines Automatikgetriebes (24), welches mit dem Motor (1) gekoppelt ist, so daß das Ändern des Übersetzungsverhältnisses zu der höheren Seite wahrscheinlicher in dem Zustand, wo die Abgaspartikel ausgebrannt werden, als in dem Zustand ver- bzw. behindert wird, wo die Abgaspartikel nicht ausgebrannt werden.

## Revendications

1. Dispositif de traitement des particules aspirées pour un moteur (1) comprenant :
- un moyen de captage de particules aspirées (12) devant être placé dans un passage d'aspiration (3) du moteur (1) pour capter des particules aspirées dans un gaz d'échappement ;
- un moyen de régénération (30b) pour la calcination d'au moins une partie des particules aspirées captées dans ledit moyen de captage de particules aspirées (12) dans une condition spécifiée ;
- un moyen de détection de la condition d'accélération (40a) pour détecter la condition d'accélération du moteur (1); et
- un moyen d'augmentation de la température du gaz d'échappement (30b, 30d, 40c) qui occasionne une augmentation de la température du gaz d'échappement affluant jusque dans ledit moyen de captage de particules aspirées (12) lorsque ledit moyen de détection de la condition d'accélération (40a) détecte la condition d'accélération du moteur (1) tandis que ledit moyen de régénération (30b, 30d, 40c) est dans son opération de calcination des particules aspirées.

2. Dispositif de traitement des particules aspirées pour un moteur (1), tel qu'il est défini dans la revendication 1, comprenant en plus :
- un moyen de réglage de rapport de transmission (40b) pour ajuster un rapport de transmission d'une transmission automatique (24) du moteur (1) conformément à une ligne de commutation définie et basée sur une condition de déplacement de véhicule ; et
- un moyen de correction de rapport de transmission (40c) pour corriger le rapport de transmission ajusté par le moyen de réglage de rapport de transmission (40b),
dans lequel ledit moyen d'augmentation de la température du gaz d'échappement (30d) inclut ledit moyen de correction de rapport de transmission (40c), ledit moyen de correction de rapport de transmission (40c) étant configuré pour être plus approprié à empêcher ledit moyen de réglage de rapport de transmission (40b) de changer le rapport de transmission vers le côté plus haut que le cas pendant lequel ledit moyen de régénération (30b) est en dehors de son opération de calcination des particules aspirées, lorsque ledit moyen de détection de la condition d'accélération (40a) détecte la condition d'accélération du moteur (1) tandis que ledit moyen de régénération (30b) est dans son opération de calcination des particules aspirées.

3. Dispositif de traitement des particules aspirées pour un moteur (1), tel qu'il est défini dans la revendication 2, dans lequel ledit moyen de correction de rapport de transmission (40c) empêche un changement du rapport de transmission vers le côté plus haut en corrigeant la ligne de commutation à laquelle se réfère ledit moyen de réglage de rapport de transmission (40b), vers le plus haut côté de vitesse de véhicule, lorsque ledit moyen de détection de la condition d'accélération (40a) détecte la condition d'accélération du moteur (1) tandis que ledit moyen de régénération (30b) est dans son opération de calcination des particules aspirées.

4. Dispositif de traitement des particules aspirées pour un moteur (1), tel qu'il est défini dans l'une quelconque des revendication 2 ou 3, comprenant en plus :
- un catalyseur d'oxydation (11) devant être placé du côté amont dudit moyen de captage de particules aspirées (12) dans le passage d'aspiration (3) ;
- un moyen d'injection de fuel (20) pour injecter directement du fuel dans une chambre de combustion (1a) du moteur (1) ;
- un moyen de détection de la quantité de particules aspirées (30a) pour détecter directement ou indirectement la quantité de particules aspirées captées dans ledit moyen de captage de particules aspirées (12) ;
- un moyen d'injection à posteriori (30b) pour exécuter en supplément une injection, à posteriori pendant la course de détente après qu'une injection principale soit accomplie à proximité du point mort supérieur de la course de compression, lorsque la quantité de particules aspirées détectée par ledit moyen de détection de la quantité de particules aspirées (30a) atteint la quantité pouvant être prédéterminée ou plus ; et
- un moyen de correction d'injection à posteriori (30d) pour corriger la quantité de l'injection à posteriori accomplie par ledit moyen d'injection à posteriori (30b),
dans lequel :
- ledit moyen de régénération (30b) inclut ledit moyen d'injection à posteriori (30b) ; et
- ledit moyen d'augmentation de la température du gaz d'échappement (30b, 30d, 40c) inclut en outre ledit moyen de correction d'injection à posteriori (30d), ledit moyen de correction d'injection à posteriori (30d) augmentant la quantité de l'injection à posteriori lorsque ledit moyen de détection de la condition d'accélération (40a) détecte la condition d'accélération du moteur (1) tandis que ledit moyen de régénération (30b) est dans son opération de calcination des particules aspirées.

5. Moteur (1) équipé d'un dispositif de traitement des particules aspirées, tel qu'il est défini dans l'une quelconque des revendications précédentes.

6. Moteur, tel qu'il est défini dans la revendication 5, comprenant en outre un turbocompresseur à suralimentation (6).

7. Produit de programme informatique qui, lorsqu'il est chargé sur un dispositif de traitement des particules aspirées pour un moteur (1) incluant au moins un ordinateur et un moyen de captage de particules aspirées (12) placé dans un passage d'aspiration (3) du moteur (1) et capable de capter des particules aspirées dans le gaz d'échappement, exécute les étapes suivantes :
- la calcination au moins partiellement des particules aspirées captées dans le moyen de captage de particules aspirées (12) sous une condition spécifiée;
- la détection d'une condition d'accélération du moteur (1) ; et
- l'augmentation de la température du gaz d'échappement affluant jusque dans ledit moyen de captage de particules aspirées (12) lorsque la condition d'accélération du moteur (1) est détectée tandis que les particules aspirées sont en train d'être calcinées.

8. Support de mémoire lisible par ordinateur sur lequel est mémorisé le produit de programme informatique tel qu'il est défini dans la revendication 7.

9. Méthode de traitement des particules aspirées pour un moteur (1) ayant un moyen de captage de particules aspirées (12) placé dans un passage d'aspiration (3), lequel est capable de capter des particules aspirées dans le gaz d'échappement, comprenant les étapes suivantes :
- la calcination au moins partiellement des particules aspirées captées dans le moyen de captage de particules aspirées (12) sous une condition spécifiée ;
- la détection d'une condition d'accélération du moteur (1) ; et
- l'augmentation de la température du gaz d'échappement affluant jusque dans ledit moyen de captage de particules aspirées (12) lorsque la condition d'accélération du moteur (1) est détectée tandis que les particules aspirées sont en train d'être calcinées.

10. Méthode selon la revendication 9, dans laquelle l'augmentation de la température du gaz d'échappement est accomplie par :
- le réglage du rapport de transmission d'une transmission automatique (24) accouplée au moteur (1) de sorte que le changement du rapport de transmission vers le côté plus haut est empêché plus probablement dans la condition où les particules aspirées sont en train d'être calcinées, que dans la condition où les particules aspirées ne sont pas calcinées.
